# EUROPÄISCHE PATENTANMELDUNG

(11) **EP 1 752 376 A2**
(43) Veröffentlichungstag der Anmeldung: **14.02.2007**
(21) Anmeldenummer: 06016076.9
(22) Anmeldetag: 02.08.2006
(51) Int. Cl.: B64D 1/06, B64C 39/02

(54) **Luftfahrzeug, insbesondere ein unbemanntes Luftfahrzeug, mit zumindest einem Waffenschacht**

(30) Priorität: 13.08.2005 DE 102005038382
(71) Anmelder: LFK-Lenkflugkörpersysteme GmbH, 85716 Unterschleissheim (DE)
(72) Erfinder: Grabmeier, Michael, 83022 Rosenheim (DE); Fasol, Dieter, 82024 Taufkirchen (DE)
(74) Vertreter: Hummel, Adam

(57) **Zusammenfassung**

Ein Luftfahrzeug, insbesondere ein unbemanntes Luftfahrzeug, das zumindest einen Waffenschacht (10) aufweist, ist dadurch gekennzeichnet, dass zumindest ein Ausrüstungscontainer (2) vorgesehen ist, der in den Waffenschacht (10) einsetzbar ist.

## Beschreibung

### TECHNISCHES GEBIET

Die vorliegende Erfindung betrifft ein Luftfahrzeug, insbesondere ein unbemanntes Luftfahrzeug, das einen Waffenschacht aufweist.

Üblicherweise sind im Waffenschacht von Luftfahrzeugen Bombenpylone vorgesehen, an denen gelenkte oder ungelenkte Bomben anbringbar sind. Derartige Luftfahrzeuge sind häufig zusätzlich mit anderen Kampf- oder Verteidigungsmitteln oder mit Aufklärungseinrichtungen versehen, um auch andere Aufgaben wahrnehmen zu können. Insbesondere bei unbemannten Luftfahrzeugen, sogenannten UCAV-Luftfahrzeugen (Unmanned Combat Air Vehicle) ist jedoch häufig kein Raum, um derartige zusätzliche Einrichtungen vorzusehen. Es wird jedoch im militärischen Einsatz angestrebt, Luftfahrzeuge für eine Vielzahl von Aufgaben flexibel verwenden zu können.

### DARSTELLUNG DER ERFINDUNG

Aufgabe der vorliegenden Erfindung ist es daher, ein gattungsgemäßes Luftfahrzeug anzugeben, welches ohne größeren Aufwand und ohne größere Stillstandzeiten flexibel für eine Vielzahl von Aufgaben nutzbar ist. Diese Aufgabe wird mit den Merkmalen des Patentanspruchs 1 gelöst.

Dabei ist zumindest ein Ausrüstungscontainer vorgesehen, der in den Waffenschacht des Luftfahrzeugs einsetzbar ist.

Ein derartiger Ausrüstungscontainer kann mit verhältnismäßig wenig Aufwand und in verhältnismäßig kurzer Zeit in den Waffenschacht des Luftfahrzeugs eingesetzt werden. Unterschiedliche Ausrüstungscontainer können am Boden vorkonfiguriert und vorbestückt werden, so dass die Standzeit des Luftfahrzeugs am Boden zwischen zwei Einsätzen minimiert werden kann, da - neben der Betankung des Luftfahrzeugs - nur der Ausrüstungscontainer auszuwechseln ist.

Vorzugsweise ist der Ausrüstungscontainer mit Befestigungsmitteln versehen, mittels derer er an einer im Waffenschacht vorgesehenen Bombenaufhängung befestigbar ist. Diese Ausgestaltung erlaubt es, bereits vorhandene Luftfahrzeuge, die für den Bombenabwurf konzipiert sind, ebenfalls mit Ausrüstungscontainern zu versehen und so in ein flexibles Ausrüstungscontainer-Konzept einzubinden.

Vorzugsweise ist der Ausrüstungscontainer mit elektrischen und/oder optischen Verbindungseinheiten versehen, die mit entsprechenden im Waffenschacht, insbesondere an einem Bombenpylon, vorgesehenen Verbindungseinrichtungen abkoppelbar zusammenwirken. Diese Ausgestaltungsform gestattet es zudem, außer der mechanischen Anbringung des Ausrüstungscontainers am Luftfahrzeug auch eventuell vorhandene und erforderliche elektrische und/oder optische Versorgungs- und Kommunikationsverbindungen zwischen dem Luftfahrzeug und dem Ausrüstungscontainer beziehungsweise einer darin enthaltenen Avionik herzustellen.

In einer bevorzugten Ausführungsform ist der Ausrüstungscontainer ein Bewaffnungscontainer. Dabei weist der Ausrüstungscontainer vorzugsweise zumindest eine Bombenaufnahme- und Bombenabwurfeinrichtung auf.

Vorzugsweise ist der Ausrüstungscontainer mit Kommunikationseinrichtungen zur Signal- und/oder Datenkommunikation mit einer aus dem Ausrüstungscontainer abgeworfenen lenkbaren Bombe oder einem anderen aus dem Ausrüstungscontainer abgeworfenen Lenkflugkörper versehen. Dies gestattet es, auch intelligente Waffen einzusetzen, selbst dann, wenn entsprechende Kommunikationseinrichtungen im Luftfahrzeug selbst nicht vorgesehen sind, da diese gemäß dieser vorteilhaften Weiterbildung im Ausrüstungscontainer enthalten sind, so dass das Luftfahrzeug nur bei tatsächlichem Bedarf mit diesen Kommunikationseinrichtungen über die Verbindung zum Ausrüstungscontainer ausgestattet wird.

In einer weiteren bevorzugten Ausführungsform ist der Ausrüstungscontainer als Dispenser für Submunition ausgebildet.

Der Ausrüstungscontainer kann vorzugsweise auch Einrichtungen zur Luftaufklärung aufweisen. Mit einem derartigen Ausrüstungscontainer kann das Luftfahrzeug schnell zu einem Aufklärungsluftfahrzeug umgerüstet werden.

Der Ausrüstungscontainer kann vorzugsweise auch Empfangseinrichtungen für Ortungssignale und/oder Einrichtungen zum Aussenden von Stör- und/oder Täuschungssignalen aufweisen, wodurch das Luftfahrzeug unter Einsatz dieses Containers problemlos zu einem ECM-Luftfahrzeug umgerüstet werden kann, wobei ECM für "Electronik Counter Measures" steht. Die entsprechende Ausstattung im Ausrüstungscontainer kann dann beispielsweise Radarstrahlung auffangen, die das Luftfahrzeug bedroht, wobei die empfangenen Radarsignale anhand einer vorhandenen Bibliothek mit bekannten Radarsendern verglichen wird und daraus das zugehörige Waffensystem in einem im Ausrüstungscontainer enthaltenen Rechner ermittelt wird. Die Elektronik des Ausrüstungscontainers kann dann für dieses ermittelte Waffensystem optimierte Stör- und/oder Täuschungssignale abgeben. So wird das gegnerische Radar in seiner Wirksamkeit bezüglich der Zielerfassung, Zielverfolgung und des Waffeneinsatzes erheblich eingeschränkt. Eine freie Programmierbarkeit der in dem so ausgestatteten Ausrüstungscontainer enthaltenen Rechnereinheit ermöglicht eine ständige Anpassung an neue Bedrohungen.

Vorzugsweise weist der Ausrüstungscontainer eine Raktetenannäherungs-Wameinrichtung und/oder eine Abwurfeinrichtung für Ortungsstörmittel auf. Diese Ausstattung des Ausrüstungscontainers dient in erster Linie dazu, Abwehrmaßnahmen gegen infrarotgesteuerte Raketen zur Verfügung zu stellen. Der auf diese Weise ausgestattete Ausrüstungscontainer bildet ein autonomes ICM-System, wobei ICM für "Infrared Counter Measures" steht. Als Ortungsstörmittel können bekannte Ortungsstörmittel für die Störung von infrarotgesteuerten Raketen verwendet werden.

Vorzugsweise ist der Ausrüstungscontainer so geformt, dass er im eingebauten Zustand nicht über die Außenkontur des Luftfahrzeugs hinaussteht. Hierdurch werden die aerodynamischen Eigenschaften des Luftfahrzeugs durch den Ausrüstungscontainer nicht beeinflusst. Vorzugsweise füllt der Ausrüstungscontainer den Raum des Waffenschachts im wesentlichen vollständig aus, wodurch die Öffnungsklappen des Waffenschachts entfallen können. Der Ausrüstungscontainer bildet so eine integrale Einheit mit dem Luftfahrzeug.

Weiter vorzugsweise ist der Ausrüstungscontainer oder der Waffenschacht mit zumindest einer Klappe im Bereich der Außenhaut des Luftfahrzeugs versehen, die geöffnet und geschlossen werden kann.

In einer besonders bevorzugten und vorteilhaften Ausgestaltungsform ist eine Vielzahl unterschiedlich ausgestatteter Ausrüstungscontainer vorgesehen, die bezüglich der mechanischen Befestigungsmittel zur Befestigung des Ausrüstungscontainers am Luftfahrzeug und bezüglich elektrischer und/oder optischer Verbindungsmittel zur Verbindung des Ausrüstungscontainers mit dem Luftfahrzeug sowie vorzugsweise bezüglich der äußeren Form standardisiert ausgebildet sind, wodurch das Luftfahrzeug wahlweise mit unterschiedlich ausgestalteten Ausrüstungscontainern bestückbar ist. Durch ein solches Ausrüstungscontainer-Konzept wird ein flexibles Baukastensystem geschaffen, dass es erlaubt, das Luftfahrzeug ohne größeren Aufwand schnell mit unterschiedlichen Ausrüstungscontainern zu bestücken, je nachdem welchen Auftrag das Luftfahrzeug auszuführen hat.

Ein bevorzugtes Ausführungsbeispiel der Erfindung mit zusätzlichen Ausgestaltungsdetails und weiteren Vorteilen ist nachfolgend unter Bezugnahme auf die beigefügte Zeichnung näher beschrieben und erläutert.

### KURZE BESCHREIBUNG DER ZEICHNUNGEN

Es zeigt:

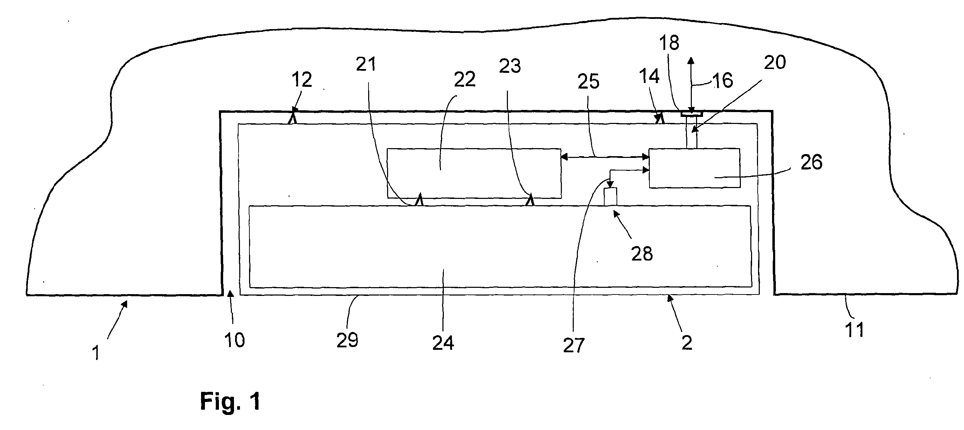

- Fig. 1: eine schematische Darstellung eines Vertikalschnitts durch einen unteren Rumpfabschnitt eines Luftfahrzeugs mit einem in einen Waffenschacht eingesetzten Ausrüstungscontainer.

### DARSTELLUNG VON BEVORZUGTEN AUSFÜHRUNGSBEISPIELEN

Fig. 1 zeigt als einzige Figur schematisch einen Vertikalschnitt durch einen unteren Rumpfabschnitt eines Luftfahrzeugs 1, welches an seiner Unterseite mit einem Waffenschacht 10 versehen ist.

In den Waffenschacht 10 des Luftfahrzeugs 1 ist ein Ausrüstungscontainer 2 eingesetzt, der mit der Außenkontur des Luftfahrzeugs 1 im wesentlichen bündig abschließt, so dass das Vorsehen von Verschlussklappen für den Waffenschacht 10 nicht erforderlich ist. Der Ausrüstungscontainer 2 ist an im Waffenschacht 10 vorgesehenen Aufhängungen 12, 14 befestigt. Über eine nur schematisch dargestellte Steckverbindung 20 ist der Ausrüstungscontainer 2 elektrisch mit einer ebenfalls nur schematisch dargestellten Verbindungsleitung 16 des Luftfahrzeugs 1 verbunden. Die Verbindungsleitung 16 ist im Bereich des Waffenschachts 10 mit einer Steckverbindung 18 versehen, die mit der Steckverbindung 20 des Ausrüstungscontainers 2 lösbar verbunden ist. Über die Verbindungsleitung 16 wird der Ausrüstungscontainer 2 mit elektrischer Energie vom Luftfahrzeug 1 versorgt und ein Datenaustausch zwischen Komponenten des Ausrüstungscontainers 2 und dem Luftfahrzeug findet über die Verbindungsleitung 16 ebenfalls statt.

In Fig. 1 ist der Ausrüstungscontainer 2 beispielhaft als Bewaffnungscontainer dargestellt, wobei an der zum Inneren des Luftfahrzeugs 1 hin gerichteten Oberseite des Ausrüstungscontainers 2 eine Befestigungs- und Abwurfeinrichtung 22 ERU (Ejection Release Unit) für eine lenkbare Bombe 24 angebracht ist. Die lenkbare Bombe 24 ist über Halteeinrichtungen 21, 23 an der ERU 22 lösbar angebracht.

Des weiteren ist im Ausrüstungscontainer 2 eine Schnittstelleneinheit 26 CIU (Container Interface Unit) vorgesehen, die über eine Leitungsverbindung 25 mit der ERU 22 elektrisch verbunden ist und die weiterhin über eine Leitungsverbindung 27 mit einer an der lenkbaren Bombe 24 vorgesehenen Steckverbindung 28 lösbar verbunden ist.

An ihrer Unterseite ist die Ausrüstungseinrichtung 2 mit einer Klappe 29 versehen, die während des Reiseflugs geschlossen ist und die mit der unteren Rumpfhaut 11 des Luftfahrzeugs 1 eine im wesentlichen übergangslose Fläche bildet. Die Klappe 29 des Ausrüstungscontainers 2 kann bei Bedarf geöffnet werden, um beispielsweise die Bombe 24 abwerfen zu können. Nach dem Abwurf der Bombe 24 wird die Klappe 29 wieder geschlossen. Anstelle von einer Klappe 29 können auch mehrere Klappen vorgesehen sein.

Den Ausrüstungscontainer gibt es in verschiedenen Ausstattungsvarianten, wobei die äußere Form und die Schnittstellenhardware zum Luftfahrzeug immer gleich ausgestaltet ist. Je nach zu fliegender Mission wird dann die geeignete Ausstattungsvariante des Ausrüstungscontainers 2 in den Waffenschacht 10 des Luftfahrzeugs 1 eingesetzt und dort mit dem Luftfahrzeug mechanisch und elektrisch verbunden.

In einer weiteren - nicht gezeigten - Ausstattungsvariante kann der Ausrüstungscontainer 2 mit einer schwenkbar steuerbaren Videokamera, die im sichtbaren Wellenlängenbereich oder im Infrarot-Wellenlängenbereich arbeitet, bestückt sein, wobei zusätzlich im Ausrüstungscontainer ein Laser-Designator zur Zielwahl und Zielbeleuchtung vorgesehen ist, mittels dem ebenfalls im Ausrüstungscontainer 2 vorhandene lasergelenkte Bomben von einer Bedienperson im Luftfahrzeug oder in einem entfernten Leitstand in das Ziel gelenkt werden können. Die Übertragung der Steuerdaten für die lasergelenkte Bombe sowie der Videodaten erfolgt analog der Datenübertragung, die in Verbindung mit der Fig. 1 beschrieben worden ist, über die Steckverbindung 18, 20 und die Verbindungsleitung 16 in das Luftfahrzeug und gegebenenfalls von Luftfahrzeug über eine Funkstrecke zum entfernten Leitstand. Diese Ausstattungsvariante erlaubt es, mit Hilfe der Videokamera kleine bewegliche Ziele zu bekämpfen und zusätzlich mittels der Videokamera eine Ergebniskontrolle durchzuführen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug
- 2: Ausrüstungscontainer
- 10: Waffenschacht
- 11: untere Rumpfhaut
- 12: Aufhängung
- 14: Aufhängung
- 16: Verbindungsleitung
- 18: Steckverbindung
- 20: Steckverbindung
- 21: Halteeinrichtung
- 22: ERU
- 23: Halteeinrichtung
- 24: lenkbare Bombe
- 25: Leitungsverbindung
- 26: CIU
- 27: Leitungsverbindung
- 28: Steckverbindung
- 29: Klappe

## Patentansprüche

1. Luftfahrzeug, insbesondere ein unbemanntes Luftfahrzeug, das zumindest einen Waffenschacht (10) aufweist,
**dadurch gekennzeichnet,**
**dass** zumindest ein Ausrüstungscontainer (2) vorgesehen ist, der in den Waffenschacht (10) einsetzbar ist.

2. Luftfahrzeug nach Anspruch 1,
**dadurch gekennzeichnet,**
**dass** der Ausrüstungscontainer (2) mit Befestigungsmitteln versehen ist, mittels derer er an einer im Waffenschacht (10) vorgesehenen Bombenaufhängung (12, 14) befestigbar ist.

3. Luftfahrzeug nach Anspruch 1 oder 2,
**dadurch gekennzeichnet,**
**dass** der Ausrüstungscontainer (2) mit elektrischen und/oder optischen Verbindungseinrichtungen versehen ist, die mit entsprechenden im Waffenschacht (10), insbesondere an einem Bombenpylon, vorgesehenen Verbindungseinrichtungen abkoppelbar zusammenwirken.

4. Luftfahrzeug nach einem der vorhergehenden Ansprüche,
**dadurch gekennzeichnet,**
**dass** der Ausrüstungscontainer (2) ein Bewaffnungscontainer ist.

5. Luftfahrzeug nach Anspruch 4,
**dadurch gekennzeichnet,**
**dass** der Ausrüstungscontainer (2) zumindest eine Bombenaufnahme- und Bombenabwurfeinrichtung aufweist.

6. Luftfahrzeug nach einem der vorhergehenden Ansprüche,
**dadurch gekennzeichnet,**
**dass** der Ausrüstungscontainer (2) Kommunikationseinrichtungen zur Signal- und/oder Datenkommunikation mit einer aus dem Ausrüstungscontainer (2) abgeworfenen lenkbaren Bombe oder einem anderen aus dem Ausrüstungscontainer abgeworfenen Lenkflugkörper versehen ist.

7. Luftfahrzeug nach einem der Ansprüche 1 bis 3,
**dadurch gekennzeichnet,**
**dass** der Ausrüstungscontainer (2) als Dispenser für Submunition ausgebildet ist.

8. Luftfahrzeug nach einem der vorhergehenden Ansprüche,
**dadurch gekennzeichnet,**
**dass** der Ausrüstungscontainer (2) Einrichtungen zur Luftaufklärung aufweist.

9. Luftfahrzeug nach einem der vorhergehenden Ansprüche,
**dadurch gekennzeichnet,**
**dass** der Ausrüstungscontainer (2) Empfangseinrichtungen für Ortungssignale und/oder Einrichtungen zum Aussenden von Stör- und/oder Täuschungssignalen aufweist.

10. Luftfahrzeug nach einem der vorhergehenden Ansprüche,
**dadurch gekennzeichnet,**
**dass** der Ausrüstungscontainer (2) eine Raketenannäherungs-Warneinrichtung und/oder eine Abwurfeinrichtung für Ortungsstörmittel aufweist.

11. Luftfahrzeug nach einem der vorhergehenden Ansprüche,
**dadurch gekennzeichnet,**
**dass** der Ausrüstungscontainer (2) so geformt ist, dass er im eingebauten Zustand nicht über die Außenkontur des Luftfahrzeugs hinaussteht.

12. Luftfahrzeug nach einem der vorhergehenden Ansprüche,
**dadurch gekennzeichnet,**
**dass** der Ausrüstungscontainer (2) den Raum des Waffenschachts (10) im wesentlichen vollständig ausfüllt.

13. Luftfahrzeug nach einem der vorhergehenden Ansprüche,
**dadurch gekennzeichnet,**
**dass** der Ausrüstungscontainer (2) oder der Waffenschacht (10) mit zumindest einer Klappe im Bereich der Außenhaut des Luftfahrzeugs versehen ist, die geöffnet und geschlossen werden kann.

14. Luftfahrzeug nach Anspruch 1,
**dadurch gekennzeichnet,**
**dass** eine Vielzahl unterschiedlich ausgestatteter Ausrüstungscontainer (2) gemäß den Ansprüchen 2 bis 13 vorgesehen sind, die bezüglich der mechanischen Befestigungsmittel zur Befestigung des Ausrüstungscontainers (2) am Luftfahrzeug und bezüglich elektrischer und/oder optischer Verbindungsmittel zur Verbindung des Ausrüstungscontainers (2) mit dem Luftfahrzeug sowie vorzugsweise auch bezüglich der äußeren Form standardisiert ausgebildet sind, so dass das Luftfahrzeug wahlweise mit unterschiedlich ausgestalteten Ausrüstungscontainern (2) bestückbar ist.
